# EUROPEAN PATENT SPECIFICATION

(11) **EP 1 567 015 B1**
(45) Date of publication and mention of the grant of the patent: **24.01.2007**
(21) Application number: 03776921.3
(22) Date of filing: 01.12.2003
(51) Int. Cl.: A21D 8/06, A21D 13/00, A21D 13/08, A21D 10/02

(54) **MICROWAVABLE FOOD PRODUCT**
MIKROWELLENTAUGLICHE LEBENSMITTEL
PRODUIT ALIMENTAIRE UTILISABLE AU MICRO-ONDES

(30) Priority: 06.12.2002 GB 0228548
(43) Date of publication of application: 31.08.2005
(73) Proprietor: UNILEVER PLC, London EC4P 4BQ (GB); UNILEVER N.V., 3013 AL Rotterdam (NL)
(72) Inventor: BOWS, John, Richard Unilever PLC, Bedford, Bedfordshire MK44 1LQ (GB); MCBRIDE, Malcolm, John Unilever PLC, Bedford, Bedfordshire MK44 1LQ (GB); MCCURRACH, Fiona, Clare Unilever PLC, Bedford, Bedfordshire MK44 1LQ (GB)
(74) Representative: Cornish, Kristina Victoria Joy
(86) International application number: PCT/EP2003/013570
(87) International publication number: WO 2004/052104

(56) References cited:
- EP-A- 0 333 423
- EP-A- 0 617 896
- WO-A-02/40374
- US-A- 4 190 757
- US-A- 4 663 506
- US-A- 5 227 599
- US-A- 5 247 149

## Description

This invention relates to microwavable food products and in particular to a microwavable food product comprising a cereal dough.

The use of microwave energy for cooking has been available for many years. However, many foods are considered to be not readily susceptible to microwave cooking since the results are inferior to traditional cooking methods, such as baking. Such foods share the characteristic that microwave energy does not preferentially heat the surface of the food item or else the microwave energy produces an undesirable food texture. Examples of such food products include bread dough, pizza dough, puff pastry dough and the like. In addition, traditional cooking methods may impart a browning and crisp texture to the surface of such food products which is not readily obtained with microwave cooking.

Various attempts have been made to produce microwavable food products comprising bread dough, pizza dough, puff pastry and the like.

EP 0776604A discloses a dough composition suitable for the preparation of a bread roll. The bread rolls are prepared by baking in a conventional oven and thereafter the rolls may be frozen and stored. The bread rolls may be reheated in a microwave oven by applying a susceptor around the bread rolls. Optionally after baking, the bread rolls may be provided with a hole, which hole can be filled with a savoury or sweet filling.

EP 509566 discloses a baked composite dough product comprising a puff pastry layer having attached thereto an anchoring layer of pastry which is provided with at least one edible protective layer having moisture-barrier properties. After baking the composite layer of the baked product is provided with the edible protective layer having moisture-barrier properties and thereafter the product is filled with a moist filling material of the savoury or sweet type. The product may be frozen and stored and heated in a microwave oven.

EP 717595 discloses a laminated dough system comprising alternating layers of dough in laminated fat wherein at least one of the laminated fat layers contains a water binding agent while simultaneously at least one of the outer layers of the system is provided with a moisture barrier layer. The dough may be filled and baked in a conventional oven. Thereafter the baked product may be frozen and stored and reheated in a microwave oven.

EP 303511 discloses a pie product having a bottom crust dough which is suitable for baking and browning in a microwave oven. The pie product comprises:
a) a tray for supporting the pie, the tray being composed of a microwave-interactive material and being in heat-conductive contact with the bottom crust dough;
b) a heat-conductive release coating interposed between an interior surface of the tray and the bottom crust dough;
c) the bottom crust dough is composed of a dough-base having added thereto a reducing sugar and amino acid sauce in an amount sufficient to promote a chemical surface browning reaction during the desired microwave exposure period; and
d) a pie filling within the bottom crust dough, the filling comprising less than 90% water.

Commercial food products are known comprising filled pies of raw puff pastry intended for microwave cooking. The pies are supported in a susceptor tray in a cardboard box with a susceptor sheet above the pie to aid browning.

US Patent 5247149 discloses a frozen pizza of uncooked dough covered with a top layer except for an outer layer sauce free ring of dough, which is packaged with a microwave susceptor component which enables the pizza to be cooked in the microwave so that the outer ring is brown and crisp. The microwave susceptor comprises a sheet on which the pizza rests and a component which is either directly on top of or supported above the dough. The susceptor does not cover the entire top of the pizza but is limited to the peripheral region to brown the outer sauce free ring of dough.

Various different types of susceptor and packages comprising a susceptor have been proposed for use with microwave cooking products.

WO01/23275 discloses a microwaveable laminate for heating, browning and crisping products.

WO01/30657 discloses a microwave susceptor comprising channel means formed in the obverse face for channelling moisture. A food package comprising a box having a base comprising said microwave susceptor and the other interior surfaces coated with second susceptor material is disclosed. The package is particularly suitable for cooking meat products.

US-A-605469 discloses a microwaveable tray comprising a microwave susceptor material which may have side wall tabs comprising susceptor material which can contact the outer sides of a food item, such as a pizza. The tray may be enveloped in a sealed polymer bag which has a microwave shield above the centre of the food item.

The present invention provides a food product comprising uncooked cereal dough which may be cooked in a microwave oven to provide products having desirable characteristics.

According to the present invention there is provided a method of cooking a food product comprising the steps of:
- providing a food product comprising a frozen uncooked cereal dough that expands on heating, the cereal dough being contained in a sealed package which is dimensioned such that there is free volume within the package defined by the internal surface of the package which comprises contacts areas, the package comprising susceptor material in at least some of said contact areas to cause browning and/or crisping of the cereal dough during microwave cooking; and
- cooking said food product in a microwave oven such that the package remains sealed and the cereal dough expands, the shape of the cooked cereal dough being defined, at least in part, by said contact areas.

It has been found that uncooked cereal dough, that expands on cooking, may be cooked in a microwave oven to provide cooked products having properties similar to conventionally baked products by containing the uncooked dough in a package which is dimensioned such that it has free space but there is intimate contact between the interior surface of the package and the dough as the dough expands upon cooking. The contacting surface of the package comprises susceptor material in order to apply localised heating to the surface which may result in browning and/or crisping. The package is sufficiently resilient such that it provides shape retention to the cooked dough product as it expands thereby defining the shape of the cooked product.

Preferably, the package is sealed. Preferably, the upper surface of the food product comprises cereal dough and a substantial proportion, e.g. at least 60%, preferably at least 80%, of the upper surface area of the cereal dough contacts the internal surface of the package when the cereal dough is cooked.

The cereal dough used in the invention must be capable of expansion upon heating.

The mechanism for expansion of the cereal dough is not important. For example, this may be caused by the action of yeast; additives, such as baking powder; the presence of a dispersed fat phase; trapped air in the mix etc. Cereal dough mixes comprising yeast may be proved before or after packaging and cooking. Suitable cereal doughs include bread dough, pizza dough, puff pastry dough, croissant dough, sponge mixes etc. Preferably the uncooked dough expands by at least 50% preferably at least 75%, more preferably at least 100% by volume on proving and cooking.

Many bread dough compositions are known in the art. Conventional ingredients for these doughs include flour, yeast, salt, fat, emulsifier, sugar and water which can be present in various amounts, depending upon the type of dough desired.

Puff pastry dough is generally made from flour, water, salt, shortening material and additives if required. According to one method the dough is rolled to a sheet folded several times and rolled out again, care being taken that the sheets do not adhere more than spotwise by introducing separate layers of fat or dry flour. Upon baking, a light structure of numerous crisp layers is developed.

According to a further method cubes of fat are introduced into the dough and rough blended which results in platelets of fat being distributed throughout the dough. Upon baking the dough expands to form a light structure.

Sponge mixes may also be used in the invention. Sponge mixes generally comprise eggs, sugar and flour with baking powder and little or no fat.

The dough may be filled with sweet or savoury filling. Suitable fillings include meat such as poultry, beef, pork etc. which may be minced or diced, vegetables, fruits and the like. The filing may comprise a liquid e.g. a sauce which could be sweet, savoury, vegetable meat, or fish. If the filling is liquid it preferably has the rheological properties so that it remains within the product after cooking. Thus, a wide range of good products may be made in accordance with the invention e.g. bread rolls, croissants, sausage rolls, meat pies, fruit pies, pain au chocolate, etc.

The package used in the invention comprises a microwave susceptor material. A microwave susceptor refers to a structure which is capable of absorbing microwave radiation and of becoming hot upon such absorption. A microwave susceptor is typically a laminated structure comprising a thin microwave-absorbing layer disposed between a food contact barrier layer and a structural backing layer. Typically, microwave susceptors are formed by depositing a thin conductive film, usually an aluminium film, onto a polymer substrate and then laminating the resulting metalised polymer film onto a structural backing layer which may be a polymer film or cardboard. The conductive film may be deposited pattern wise as disclosed, for example, in WO01/23275.

Since the susceptor becomes hot upon exposure to microwave radiation it provides localised heating. If the susceptor is in contact with the food product during cooking, browning and crisping of the surface of the product may be obtained. In accordance with the invention, the cereal dough expands upon microwave cooking and comes in contact with the interior surface of the packaging, at least part of which comprises susceptor material, thereby browning and crisping the surface of the dough. The entire interior surface of the package may comprise susceptor material. Alternatively, the susceptor may be positioned only in those areas where localised heating of the surface of the food product is desired.

The package may be rigid or flexible or a combination thereof e.g. rigid base and flexible top. The package is dimensioned to be larger than the uncooked dough product such that there is free space above and optionally to the sides of the cereal dough product. The dimensions of the package are such that when the cereal dough product is cooked and expands it comes into contact with the interior surface of the package thereby exerting a pressure against the interior surface of the package. The package must be sufficiently resilient that it resists the pressure of the expanding dough thereby defining the shape of the cooked cereal dough. This may readily be achieved by having a box or carton having a base, sides and lid member which may be closed and secured by a flap arrangement. Alternatively, the package may be made of flexible sheet material which envelops the food product and is sealed around its edges or otherwise wraps the food product so that edges of the sheet material overlap. In a further embodiment the food product may be disposed in a tray or container sealed with a lid of a rigid or flexible material.

Depending upon the particular type of food product, the food product may be placed on a base member comprising susceptor material for heating the bottom of the food product. The susceptor material may be corrugated for channelling moisture as disclosed for example in WO01/30657.

The packaging material can additionally comprise an antenna material to control the cooking characteristics of the package e.g. to enhance the differential between outer crispness and inner moisture. Antenna materials are typically conductive elements, usually aluminium, which are preferably thick enough not to self heat when exposed to microwave energy. The antenna material may comprise regions of discontinuous metal foil laminated to a support to reflect and redirect microwaves thereby restricting penetration to the product core and improving the uniformity of product heating and/or browning as well as shielding specific regions to prevent drying out or overheating.

The package may comprise a browning dish for browning the base and sides of the dough product. The browning dish may be reusable.

The food products of the invention may comprise freshly prepared cereal dough or the product may be frozen. The cereal dough may be packaged before or after freezing. In general the food product is frozen after packaging. In the case of a yeast containing dough the cereal dough may be frozen before or after proving. The food product may be cooked directly from frozen in a microwave oven, with or without using a defrost cycle.

The invention will now be described with reference to the accompanying drawings in which:
Figure 1 represents the plan view of a food product in accordance with the invention and
Figure 2 represents a cross-section along the line A-A shown in Figure 1.

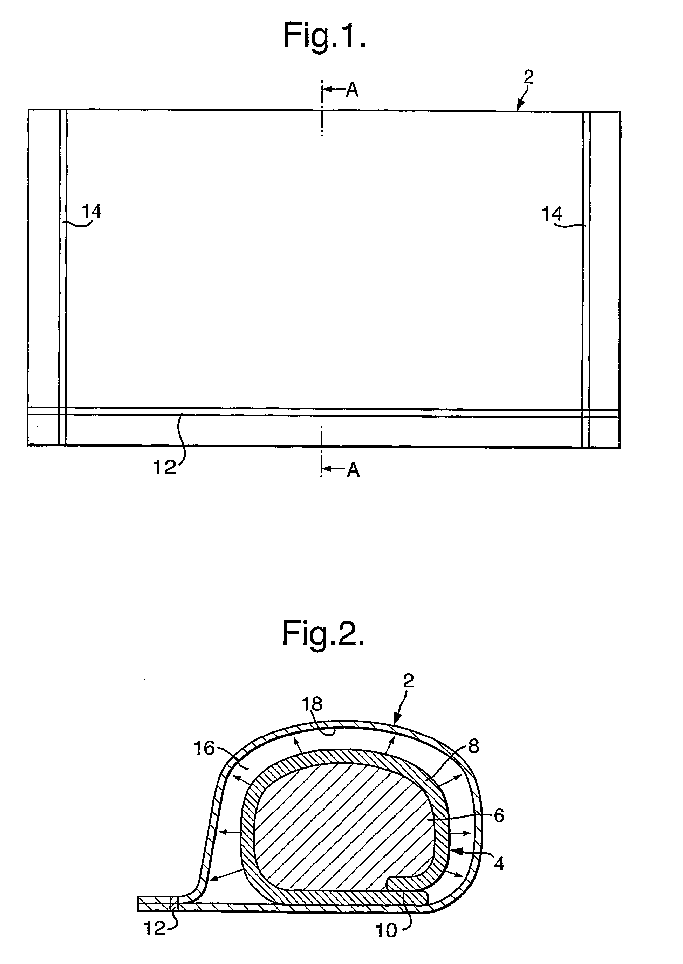

Figures 1 and 2 disclose a food product comprising filled puff pastry e.g. a sausage roll. The food product comprises a package (2) containing a cereal dough product generally shown at (4). The package is formed of a flexible susceptor material which is a laminated structure comprising polymeric layers sandwiching a thin conductive film e.g. aluminium. The metal film may be patterned.

The food product (4) comprises a filling (6) e.g. sausage meat, around which is wrapped one or more layers of puff pastry dough (8). The dough is wrapped around the filling and sealed at (10) in a conventional manner.

The susceptor material is wrapped around the food product and sealed along the major edge (12) and ends (14). The seals may conveniently be formed by heat sealing the polymeric material.

The package is dimensioned to provide free space (16) within the package when the food product is uncooked. Upon microwave cooking the puff pastry dough will expand as shown by the arrows to cause the puff pastry to contact the interior surface (18) of the package. The expanded puff pastry will occupy substantially all the free space (16). The expanded puff pastry applies pressure to the interior surface (18) of the package because of the strength of the seals (12, 14) and thereby the packaging retains the shape of the cooked cereal dough. The presence of the susceptor material results in the entire surface of the food product being crispy and brown.

The invention will now be illustrated by the following Examples in which all parts and percentages are by weight unless otherwise indicated. The fused susceptor used in the Examples was identical to the susceptor material used on the products commercially available from Iglo Mora under the trade name Pistolet.

### Example 1

### A sate filled bread roll

### Recipe:

| Dough | % |
|---|---|
| Flour | 58.6 |
| Water | 33.2 |
| Yeast | 2.1 |
| Salt | 1.2 |
| Fat | 2.0 |
| Bread improvers | 1.9 |
| Milk powder | 1.0 |
| Total | 100 |

| Filling | % |
|---|---|
| Water | 41 |
| Onion | 2 |
| Oil | 1 |
| Flavours | 8 |
| Peanut butter | 18 |
| Sugar | 2 |
| Milk powder | 4 |
| Turkey | 23 |
| Starch | 1 |
| Total | 100 |

### Methodology:

1. Add all dough ingredients together in a spiral dough mixer and mix for three minutes on slow speed and seven minutes on fast speed.
2. Bulk prove (covered) for twenty minutes at 24°C and 80% RH.
3. Roll dough to a sheet to 3mm thickness.
4. Cut into rectangles 9cm by 10cm.
5. Place a cylinder of filling in the middle (filling 7.5cm by 2cm x 2.5cm).
6. Fold and seal the dough so that the resulting product is 10cm by 2.5cm x 4cm in size.
7. Wrap in flexible, fused susceptor (22cm by 22.5cm) and heat seal (4cm in from long edge and 2cm in from ends).
8. Prove for sixty minutes at 24°C and 80% RH.
9. Blast freeze at -30°C for two hours then store at -18°C for use (frozen product is 10cm x 2.5cm x 5cm).

After cooking the frozen product in a microwave oven for 2.5 minutes at 1000watts the dimensions of the bread roll are 11.5 x 4 x 5cm and the surface of the bread roll is pressed against the susceptor. The bread roll has a crisp brown surface and good interior texture.

### Example 2

### Sausage Roll

### Recipe:

| | |
|---|---|
| Puffy pastry | 60% |
| Sausagemeat | 40% |

### Methodology:

1. Roll out puff pastry to 3mm using pastry brake. Cut into squares 9cm x 9cm.
2. Add cylinder of sausagemeat (7cm x 2cm x 2.5cm) to pastry and fold pastry over meat and seal edges. Resulting raw product is 9.5cm x 2.5cm x 3.5cm.
3. Score sausage roll three times on top.
4. Wrap in flexible, fused susceptor (22cm by 20cm) and heat seal (4cm in from long edge and 1.5cm in from ends).
5. Blast freeze at -30°C for two hours then store at -18°C.

After cooking in a microwave oven for 2.5 minutes at 1000 Watts the sausage roll dimension is 9cm x 4.5cm x 5cm with the surface of the sausage roll pressed against the packaging. The sausage roll has a crisp, brown surface.

### Example 3

### A sate filled croissant

### Recipe:

| Croissant Formulation | |
|---|---|
| | % |
| Flour | 40 |
| Sugar | 2 |
| Salt | 1 |
| Fat | 2 |
| Gelatin | 1 |
| Croissant improver | 1 |
| Yeast | 3 |
| Water | 26 |
| Laminating fat | 24 |
| Total | 100 |

| Filling | |
|---|---|
| | % |
| Water | 40.8 |
| Onion | 1.3 |
| Oil | 0.8 |
| Flavours | 8.3 |
| Peanut butter | 18.0 |
| Sugar | 2.2 |
| Milk powder | 4.0 |
| Turkey | 28.3 |
| Starch | 1.3 |
| Total | 100 |

### Methodology:

1. Add all ingredients except laminating fat together in a spiral dough mixer and knead for 2 minutes at slow speed, then 7 minutes at fast speed. Let the mixture rest for 5 minutes.
2. Work laminating fat well and roll out to a rectangle approximately 10mm x 33cm.
3. Roll out dough to a rectangle approximately 15mm x 66cm. Put fat from step 2 on one half of dough rectangle and fold other half of dough over. Leave to rest for 5 minutes
4. Roll dough mix to about 9mm thickness, fold in flour and turn. Leave to rest for 5 minutes.
5. Roll dough mix to about 6.5mm thickness, fold in flour and trim. Leave to rest for 5 minutes.
6. Roll dough mix to about 3mm, cut into rectangles (50g) approximately 12cm x 8.5cm.
7. Add cylinder of filling (30g) (9cm x 2cm x 2.5cm) to dough and fold dough over filling and seal edges. Resulting raw product is approximately 11.5cm x 2.5cm x 4cm.
8. Prove at 32°C for 65 minutes.
9. Blast freeze at -30°C.
10. Wrap in flexible, fused susceptor (22cm x 20cm) and heat seal (4cm in from long edge and 1.5cm from ends).
11. Store in freezer.

After cooking in a microwave oven for 2.5 minutes at 1000 watts a croissant having approximate dimensions 12.5cm x 3.5cm x 5cm with the surface of the croissant pressed against the susceptor was obtained. Removal of the susceptor revealed a crisp, brown surface to the product.

The experiment was repeated but with wrapping the dough in the fused susceptor (22cm x 20cm) in step 10 without heat sealing. After cooking the product had expanded to 12.5cm x 4cm x 6cm remaining in contact with the susceptor and upon removal of the susceptor a crisp brown surface to the product was revealed.

The product was wrapped in the susceptor after blast freezing to facilitate handling since the product after proving from step 8 was sticky. Alternatively the product could be wrapped in the susceptor after step 7, before proving.

## Claims

1. A method of cooking a food product which comprises the steps of:
- providing a food product comprising a frozen uncooked cereal dough that expands on heating, the cereal dough being contained in a sealed package which is dimensioned such that there is free volume within the package defined by the internal surface of the package which comprises contacts areas, the package comprising susceptor material in at least some of said contact areas to cause browning and/or crisping of the cereal dough during microwave cooking; and
- cooking said food product in a microwave oven such that the package remains sealed and the cereal dough expands, the shape of the cooked cereal dough being defined, at least in part, by said contact areas.

2. A method as claimed in Claim 1 in which the upper surface of the food product comprises cereal dough and at least 60% of the upper surface area of the cereal dough contacts the internal surface of the package when the cereal dough is cooked.

3. A method as claimed in Claim 2 in which at least 80% of the upper surface of the cereal dough is in contact with the internal surface of the package when the cereal dough is cooked.

4. A method as claimed in any preceding claim in which the cereal dough is selected from bread dough, pizza dough, puff pastry dough, croissant dough and sponge mix.

5. A method as claimed in any preceding claim in which the cereal dough is filled with a savoury or sweet filling.

6. A method as claimed in Claim 5 in which the filling is selected from meat, vegetables, fruit and combinations thereof.

7. A method as claimed in Claim 5 or Claim 6 in which the filling is a liquid which has rheological properties so that it remains in the product after cooking.

8. A method as claimed in any preceding Claim in which the package comprises a flexible sheet material.

9. A method as claimed in Claim 6 in which the package consists of flexible sheet material which is wrapped around the cereal dough and sealed around its edges.

10. A method as claimed in any one of Claims 1 to 7 in which the package is in the form of a box or carton.

11. A method as claimed in any preceding claim in which the cereal dough is positioned in a dish or on a plate of susceptor material.

12. A method as claimed in any preceding claim in which the substantially all of said interior surface of the package comprises the susceptor material.

13. A method as claimed in any one of Claims 1 to 11 in which the package additionally comprises antenna material.

14. A method as claimed in any preceding claim in which the food product is a bread roll, meat pie, fruit pie, sausage roll or croissant.

15. A method as claimed in any preceding claim in which the cereal dough comprises yeast and the cereal dough is proven.

16. A method as claimed in any preceding Claim in which the cereal dough is frozen after packaging.

17. A method as claimed in any preceding Claim in which the cereal dough comprises yeast and is frozen after proving.

18. A method as claimed in any preceding Claim in which the cereal dough comprises yeast and is frozen without proving.

## Patentansprüche

1. Verfahren zum Garen eines Lebensmittelprodukts, das die Schritte umfasst von:
- Bereitstellen eines Lebensmittelprodukts, umfassend einen gefrorenen nicht gegarten Getreideteig, der sich beim Erhitzen ausdehnt, wobei der Getreideteig in einer verschlossenen Verpackung enthalten ist, die derart bemessen ist, dass es freies Volumen innerhalb der Verpackung gibt, definiert durch die Innenoberfläche der Verpackung, welche Kontaktflächen umfasst, wobei die Verpackung Suszeptormaterial in mindestens einigen von den Kontaktflächen umfasst, um Bräunung und/oder Knusprigkeitsbildung des Getreideteigs während des Mikrowellengarens zu veranlassen, und
- Garen des Lebensmittelprodukts in einem Mikrowellenofen, sodass die Verpackung verschlossen bleibt und sich der Getreideteig ausdehnt, wobei die Form von dem gegarten Getreideteig mindestens zum Teil durch die Kontaktflächen definiert ist.

2. Verfahren nach Anspruch 1, wobei die obere Oberfläche des Lebensmittelprodukts Getreideteig umfasst und mindestens 60 % der oberen Oberfläche des Getreideteigs mit der inneren Oberfläche der Verpackung in Kontakt kommt, wenn der Getreideteig gegart wird.

3. Verfahren nach Anspruch 2, wobei mindestens 80 % der oberen Oberfläche des Getreideteigs mit der inneren Oberfläche der Verpackung in Kontakt ist, wenn der Getreideteig gegart wird.

4. Verfahren nach einem vorangehenden Anspruch, wobei der Getreideteig ausgewählt ist aus Brotteig, Pizzateig, Blätterteig, Croissantteig und Biskuitteig.

5. Verfahren nach einem vorangehenden Anspruch, wobei der Getreideteig mit einer pikanten oder süßen Füllung gefüllt ist.

6. Verfahren nach Anspruch 5, wobei die Füllung ausgewählt ist aus Fleisch, Gemüse, Obst und Kombinationen davon.

7. Verfahren nach Anspruch 5 oder Anspruch 6, wobei die Füllung eine Flüssigkeit ist, die solche rheologische Eigenschaften aufweist, dass sie nach Garen in dem Produkt verbleibt.

8. Verfahren nach einem vorangehenden Anspruch, wobei die Verpackung ein flexibles Folienmaterial umfasst.

9. Verfahren nach Anspruch 6, wobei die Verpackung aus einem flexiblen Folienmaterial besteht, das um den Getreideteig gewickelt ist und um seine Kanten verschlossen ist.

10. Verfahren nach einem der Ansprüche 1 bis 7, wobei die Verpackung in Form eines Kastens oder Kartons ist.

11. Verfahren nach einem vorangehenden Anspruch, wobei der Getreideteig in einer Servierplatte oder auf einem Teller von Suszeptormaterial angeordnet wird.

12. Verfahren nach einem vorangehenden Anspruch, wobei im Wesentlichen alles von der inneren Oberfläche der Verpackung das Suszeptormaterial umfasst.

13. Verfahren nach einem der Ansprüche 1 bis 11, wobei die Verpackung zusätzlich Antennenmaterial umfasst.

14. Verfahren nach einem vorangehenden Anspruch, wobei das Lebensmittelprodukt Brötchen, Fleischpastete, Obstkuchen, Blätterteig mit Wurstfüllung oder Croissant ist.

15. Verfahren nach einem vorangehenden Anspruch, wobei der Getreideteig Hefe umfasst und der Getreideteig gegangen ist.

16. Verfahren nach einem vorangehenden Anspruch, wobei der Getreideteig nach dem Verpacken gefroren wird.

17. Verfahren nach einem vorangehenden Anspruch, wobei der Getreideteig Hefe umfasst und nach dem Gehen gefroren wird.

18. Verfahren nach einem vorangehenden Anspruch, wobei der Getreideteig Hefe umfasst und ohne Gehen gefroren wird.

## Revendications

1. Procédé de cuisson d'un produit alimentaire qui comprend les étapes consistant à :
- fournir un produit alimentaire comprenant une pâte de céréales crue et congelée qui gonfle sous l'effet du chauffage, la pâte de céréales étant contenue dans un emballage fermé qui est dimensionné de manière à ce qu'il y ait un volume libre à l'intérieur de l'emballage défini par la surface interne de l'emballage qui comprend des aires de contact, l'emballage comprenant un matériau suscepteur dans au moins une partie desdites aires de contact pour que la pâte de céréales devienne dorée et croustillante durant la cuisson aux micro-ondes ; et
- la cuisson dudit produit alimentaire dans un four micro-ondes de manière à ce que l'emballage reste fermé et à ce que la pâte de céréales gonfle, la forme de la pâte de céréales cuite étant ainsi définie, au moins partiellement, par lesdites aires de contact.

2. Procédé selon la revendication 1, dans lequel la surface supérieure du produit alimentaire comprend de la pâte de céréales et au moins 60 % de l'aire de la surface supérieure de la pâte de céréales est en contact avec la surface interne de l'emballage lorsque la pâte de céréales est cuite.

3. Procédé selon la revendication 2, dans lequel au moins 80 % de la surface supérieure de la pâte de céréales est en contact avec la surface interne de l'emballage lorsque la pâte de céréales est cuite.

4. Procédé selon l'une quelconque des revendications précédentes, dans lequel la pâte de céréales est choisie parmi de la pâte à pain, de la pâte à pizza, de la pâte feuilletée, de la pâte à croissants et de la pâte à gâteau éponge.

5. Procédé selon l'une quelconque des revendications précédentes, dans lequel la pâte de céréales est garnie d'une garniture savoureuse ou sucrée.

6. Procédé selon la revendication 5, dans lequel la garniture est choisie parmi la viande, les légumes, les fruits et des combinaisons de ceux-ci.

7. Procédé selon la revendication 5 ou la revendication 6, dans lequel la garniture est un liquide qui possède des propriétés rhéologiques de manière à ce qu'il reste dans le produit après la cuisson.

8. Procédé selon l'une quelconque des revendications précédentes, dans lequel l'emballage comprend un matériau de feuille flexible.

9. Procédé selon la revendication 6, dans lequel l'emballage est constitué par un matériau de feuille flexible qui est emballé autour de la pâte de céréales et fermé autour de ses bords.

10. Procédé selon l'une quelconque des revendications 1 à 7, dans lequel l'emballage se trouve sous la forme d'une boîte ou d'un carton.

11. Procédé selon l'une quelconque des revendications précédentes, dans lequel la pâte de céréales est placée dans un plat ou sur une assiette en matériau suscepteur.

12. Procédé selon l'une quelconque des revendications précédentes, dans lequel sensiblement la totalité de la surface intérieure de l'emballage comprend le matériau suscepteur.

13. Procédé selon l'une quelconque des revendications 1 à 11, dans lequel l'emballage comprend en outre un matériau d'antenne.

14. Procédé selon l'une quelconque des revendications précédentes, dans lequel le produit alimentaire est un petit pain, une tourte à la viande, une tarte aux fruits, un friand ou un croissant.

15. Procédé selon l'une quelconque des revendications précédentes, dans lequel la pâte de céréales comprend de la levure et dans lequel on laisse lever la pâte de céréales.

16. Procédé selon l'une quelconque des revendications précédentes, dans lequel la pâte de céréales est congelée après l'emballage.

17. Procédé selon l'une quelconque des revendications précédentes, dans lequel la pâte de céréales comprend de la levure et est congelée après avoir levé.

18. Procédé selon l'une quelconque des revendications précédentes, dans lequel la pâte de céréales comprend de la levure et est congelée sans avoir levé.
